# EUROPÄISCHE PATENTSCHRIFT

(11) **EP 1 044 749 B1**
(45) Veröffentlichungstag und Bekanntmachung des Hinweises auf die Patenterteilung: **15.06.2005**
(21) Anmeldenummer: 00107062.2
(22) Anmeldetag: 04.04.2000
(51) Int. Cl.: B23F 19/00

(54) **Verfahren und Maschine zum Feinbearbeiten der Zahnflanken von verzahnten Werkstücken**
Method and machine for finishing the tooth flanks of toothed workpieces
Procédé et dispositif pour la finition des flancs de dents de pièces dentées

(30) Priorität: 03.05.1999 DE 19920323; 13.04.1999 DE 29906545 U
(43) Veröffentlichungstag der Anmeldung: 18.10.2000
(73) Patentinhaber: THE GLEASON WORKS, Rochester New York 14692-2970 (US)
(72) Erfinder: Becker, Johannes, 80805 München (DE); Huber, Manfred, 81825 München (DE)
(74) Vertreter: Stahl, Gerhard F.W.

(56) Entgegenhaltungen:
- EP-A- 0 620 078
- GB-A- 1 565 035
- US-A- 2 585 272
- PATENT ABSTRACTS OF JAPAN vol. 014, no. 579 (M-1063), 25. Dezember 1990 (1990-12-25) & JP 02 250718 A (MATSUSHITA ELECTRIC IND CO LTD), 8. Oktober 1990 (1990-10-08)

## Beschreibung

Die Erfindung betrifft ein Verfahren zur Feinbearbeitung der Zahnflanken von verzahnten Werkstücken mit einem angetriebenen zahnrad förmigen Werkzeug, das mit einem Werkstück in Wälzeingriff steht, wobei sich die Achsen von Werkzeug und Werkstück kreuzen.

Die Erfindung betrifft ferner eine Maschine zur Durchführung eines derartigen Verfahrens, umfassend ein Maschinenbett, einen auf dem Maschinenbett verschiebbar gelagerten ersten Schlitten, der zu Bewegungen entlang einer ersten Achse X antreibbar ist, einen auf dem ersten Schlitten verschiebbar gelagerten zweiten Schlitten, der zu Bewegungen entlang einer zu der ersten Achse X rechtwinkligen zweiten Achse Z antreibbar ist, einen mit dem zweiten Schlitten schwenkbar verbundenen Werkzeugkopf, der zur Einstellung des Achskreuzwinkels zwischen Werkzeug und Werkstück um eine zu der ersten Achse X parallele dritte Achse A schwenkbar ist, einen auf dem Werkzeugkopf angeordneten Motor für den Antrieb einer Werkzeugspindel und eine Werkstückspindel mit Spannmitteln zum Einspannen eines Werkstücks.

Eine Maschine dieser Gattung ist in der EP 0 360 953 B1 beschrieben. Bei dieser bekannten Maschine sind auf dem Maschinenbett zwei Reitstöcke angeordnet, die ein zu bearbeitendes verzahntes Werkstück zwischen sich aufnehmen, so daß es um eine horizontale Achse verdrehbar ist. Diese bekannte Maschine arbeitet im sogenannten freilaufenden Verfahren, d. h. das Werkzeug treibt über den Zahneingriff zwischen Werkzeug und Werkstück das Werkstück freilaufend an. Dabei sind je nach Ausrüstung der Maschine verschiedene bekannte Schabverfahren, wie z. B. Tauchschaben, Parallelschaben, Diagonalschaben oder Underpassschaben möglich. Zum Wechsel des Werkstücks wird der Bearbeitungsprozeß unterbrochen, d. h. das Werkzeug und das Werkstück stehen still, die Spannmittel werden gelöst, das bearbeitete Werkstück wird entnommen, und ein unbearbeitetes Werkstück wird neu eingefädelt (Zahneingriff), gespannt und anschließend vom Werkzeug angetrieben.

Die Bearbeitung beginnt nach dem Einfädeln des Werkstücks in das stillstehende Werkzeug mit einem Hochfahren des Werkzeugs auf Betriebsdrehzahl, und sie endet mit einem Abbremsen von Werkzeug und Werkstück vor dem Entladen. Während der Bearbeitung muß die Drehrichtung umgekehrt werden, um eine ungleiche Bearbeitung der Zahnflanken zu vermeiden, die ansonsten infolge der wirkenden Trägheitsmomente und der Reibkraft auftritt. Außerdem kann so die Oberfläche der Zahnflanken beeinflußt werden. Aus diesen Gründen werden in dem Bearbeitungsprozeß zusätzliche Haltezeiten eingebunden. Die Prozeßführung erfolgt bis heute mit konstanten, frei gewählten Vorschubgeschwindigkeiten und unter konstanten Drehzahlen (mit Ausnahme der Beschleunigungs- und Abbremsvorgänge), wobei innerhalb der Bearbeitung mehrere verschiedene Werte eingestellt werden können. Nach Erreichen der Solldrehzahl wird das Werkstück mit Eilzustellung bis zu einer definierten Achsabstandsposition verfahren. Die weitere Zustellung zwischen Werkzeug und Werkstück während der Bearbeitung erfolgt dann unter einem oder mehreren gewählten Vorschüben. In einer gewählten Achsabstandsposition kann der Vorschub zunächst gestoppt, die Bearbeitung unter Nenndrehzahl jedoch für die Dauer einer ersten Ausschabzeit (Haltezeit vor Wenden) weitergeführt werden. Anschließend wird das Werkzeug abgebremst, seine Drehrichtung gewechselt und wieder auf eine vorgewählte Drehzahl beschleunigt. Nach Erreichen dieser Drehzahl erfolgt eine erneute Zustellung bis auf den vorgegebenen Sollachsabstand. In dieser sogenannten Null-Position wird erneut eine Ausschabzeit (Haltezeit in Null-Position) eingelegt. Danach erfolgt ein kurzer Rückhub, an den sich eine weitere Ausschabzeit (sogenannte Wich-Zeit) anschließt, die eine Glättung der Flankenoberfläche bewirkt. Die Wahl der einzelnen Vorschubwerte, Drehzahlen, Drehrichtung und Ausschabzeiten bilden dabei die einzige Einflußmöglichkeit auf das Schabergebnis innerhalb des Prozesses. Nach der Wich-Zeit wird das Werkzeug bis zum Stillstand abgebremst, und das Werkstück wird außer Eingriff gebracht. Nach dem Entladen des bearbeiteten Werkstückes und dem Laden eines neuen Werkstückes startet der zuvor beschriebene Bearbeitungsprozeß erneut.

Der Erfindung liegt die Aufgabe zugrunde, das gattungsgemäße Verfahren hinsichtlich der Produktivität und der Qualität des Bearbeitungsvorgangs zu verbessern.

Erfindungsgemäß wird diese Aufgabe durch Anspruch 1 gelöst.

Die auf das Werkstück aufgebrachten Drehmomente, die hinsichtlich Größe und Richtung wählbar sind, ermöglichen es, die bisher durch die Umkehr der Drehrichtung des angetriebenen Werkzeugs veränderten Trägheitskräfte und Reibkräfte zu simulieren und diesen Zeitanteil einzusparen.

Eine weitere Zeitersparnis ist möglich, indem das Werkstück auf Arbeitsdrehzahl beschleunigt und mit dem rotierenden Werkzeug in Eingriff gebracht wird. Dadurch entfallen die bisherigen Zeitanteile für das gemeinsame Beschleunigen und Abbremsen von Werkstück und Werkzeug im Eingriff. Das Werkzeug kann daher ohne Unterbrechung rotieren.

Die auf das Werkstück aufgebrachten Drehmomente können auch gezielt dazu genutzt werden, um die Bearbeitung des Werkstücks zu beeinflussen und das Bearbeitungsergebnis zu verbessern. Durch das Aufbringen eines Drehmoments auf das Werkstück ist es beispielsweise möglich, auf Teilung und Rundlauf des Werkstücks Einfluß zu nehmen. Dies war bisher beim Zahnradschaben mit freilaufendem Werkstück nicht möglich.

Bei einer Weiterbildung des erfindungsgemäßen Verfahrens ist vorgesehen, daß während der Bearbeitung des Werkstücks die Größe des auf dieses aufgebrachten Drehmoments, die Drehzahl und die Zustellung in Abhängigkeit von einer Führungsgröße gesteuert werden. Dadurch ist es möglich, den Bearbeitungsprozeß, insbesondere beim Zahnradschaben unter gleichbleibenden und optimalen Bedingungen durchzuführen. Dies kann zu einer Verkürzung der Bearbeitungszeit, zu einer Verbesserung des Ergebnisses und/oder zu einer Verlängerung der Standzeit des Werkzeugs führen.

Beispielsweise können als Führungsgröße die werkzeug- oder werkstückseitig gemessenen Reaktionskräfte oder -momente verwendet werden. In diesem Fall können Zustellung, Drehzahl und Drehmoment so gesteuert werden, daß die Bearbeitung unter gleichbleibenden Zerspankräften und -bedingungen erfolgt.

Es ist aber auch möglich, als Führungsgröße die werkzeug- oder werkstückseitig gemessenen Schwingungen zu verwenden. Dadurch können dynamisch ungünstige Bearbeitungsbereiche vermieden werden. Darüber hinaus kann nach einer Eilzustellung anhand der Schwingungen der Zeitpunkt des Beginns der Zerspanung ermittelt werden. Die Schwingungen ermöglichen auch ein Erkennen des Verschleißzustandes des Werkzeugs.

Ferner können als Führungsgröße die werkzeug- oder werkstückseitig gemessenen Drehwinkelabweichungen verwendet weden. Dadurch ist es möglich, die Verzahnungsabweichungen aufgrund .der Vorbearbeitung zu erfassen und gezielt zu beeinflussen. Auch lassen sich negative Einflüsse während der Bearbeitung, hervorgerufen durch ungünstige Zahneingriffsverhältnisse (Überdeckung) dämpfen. Diese Drehwinkelabweichungen von Werkstück und Werkzeug im Wälzeingriff können mit einem elektronischen Getriebe ausgeglichen werden.

Eine Maschine zur Durchführung des erfindungsgemäßen Verfahrens ist im Patentanspruch 6 angegeben.

Die erfindungsgemäße Ausbildung der Maschine ermöglicht es, während der Bearbeitung eines Werkstücks auf der einen Werkstückspindel gleichzeitig, also zeitparallel auf einer zweiten Werkstückspindel den Belade- und Entladevorgang durchzuführen und außerdem eine zum radialen Einfädeln von Werkstück und Werkzeug notwendige Zahn/Zahnlücke-Situation zu suchen. Es ist also möglich, Werkstück und Werkzeug unter Arbeitsdrehzahl einzufädeln. Als Nebenzeit der Maschine tritt daher nur das Drehen des Schalttisches zwischen der Bearbeitungs- und der Wechselposition und die radiale Zustellung des ersten Schlittens auf. Die den Werkstückspindeln zugeordneten. Motoren eröffnen zugleich die Möglichkeit, das Ergebnis der Bearbeitung beeinflussende Maßnahmen einzuleiten. Durch diese Maßnahmen können Qualitätseinflüsse ausgeglichen werden, die aus den Eingriffsbedingungen zwischen treibender und getriebener Werkstückflanke herrühren. Gleichzeitig kann die Genauigkeit der Teilung verbessert werden, und es kann der bisher übliche zeitaufwendige Wechsel der Drehrichtung vermieden werden. Ermöglicht wird dies dadurch, indem das Werkstück in Bezug auf das Werkzeug beschleunigend oder bremsend angetrieben wird. Zu diesem Zweck sind die Drehzahl und/oder das Drehmoment der Antriebsmotoren der Werkzeugspindel und der Werkstückspindeln in beiden Drehrichtungen regelbar.

Bei zu bearbeitenden wellenförmigen Werkstücken kann der Schalttisch mit beweglichen Reitstockspitzen bestückt sein.

Zur weiteren Verbesserung der Produktivität der Maschine ist vorgesehen, daß im Bereich des Schalttisches ein Magazin für die Zu- und Abfuhr der unbearbeiteten und bearbeiteten Werkstücke angeordnet ist.

Eine automatisierte Ausführungsform der Maschine ist gekennzeichnet durch ein Greifersystem zum Überführen der unbearbeiteten/bearbeiteten Werkstücke zwischen dem Magazin und den Werkstückspindeln. Dieses Greifersystem kann einen Schwenkarm umfassen, der um eine zur Drehachse E des Schalttisches parallele Zentralachse verschwenkbar ist und an den beiden gegenüberliegenden Enden mit einem Greifer bestückt ist.

Dem Schalttisch können eine oder mehrere zusätzliche Bearbeitungsstationen zugeordnet sein, in der oder an denen die Werkstückspindeln für eine weitere Bearbeitung der Werkstücke positionierbar sind. Bei dieser weiteren Bearbeitung kann es sich um eine Vor- oder Nachbearbeitung der Werkstücke handeln, es ist aber auch möglich, zwei verschiedene Arten der Feinbearbeitung miteinander zu kombinieren.

Die Energieversorgung der den Werkstückspindeln zugeordneten Motoren und Spanneinrichtungen erfolgt zweckmäßigerweise über eine zur Drehachse des Schalttisches konzentrisch angeordnete Energiezuführungssäule.

Ein bevorzugtes Ausführungsbeispiel der Erfindung wird nachfolgend anhand der Zeichnungen näher erläutert. Es zeigt:
Fig. 1 eine Seitenansicht einer Maschine zum Feinbearbeiten der Zahnflanken von verzahnten Werkstücken mit einem außenverzahnten Werkzeug,
Fig. 2 eine Ansicht des Schalttisches der Maschine nach Fig. 1,
Fig. 3 eine Ansicht eines mit Reitstockspitzen versehenen Schalttisches,
Fig. 4 eine Draufsicht auf die Maschine nach Fig. 1, und
Fig. 5 und 6 Diagramme zur Veranschaulichung der Arbeitsweise der Machine.

Die in den Zeichnungen dargestellte Maschine dient zum Feinbearbeiten der Zahnflanken von verzahnten Werkstücken mit einem außenverzahnten Werkzeug. Unter Feinbearbeitung eines zahnradartigen Werkstücks ist Schaben und Honen zu verstehen. Diese Bearbeitung erfolgt in Zweiflanken-Wälzeingriff.

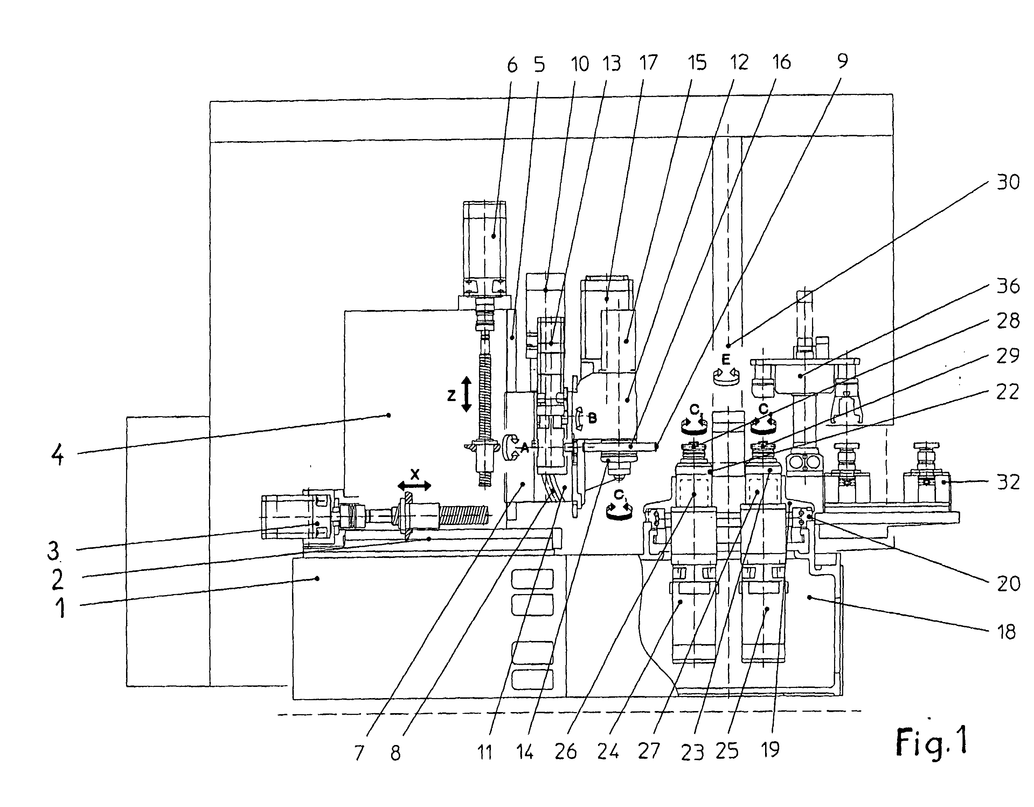

Die in Fig. 1 gezeigte Maschine besitzt ein Maschinenbett 1 mit einer horizontalen Führung 2 und einem Antriebsmotor 3 zum Verstellen eines Horizontalschlittens 4 entlang einer ersten Achse X. Der Horizontalschlitten 4 besitzt seinerseits eine vertikale Führung 5 und einen Antriebsmotor 6 zum Verstellen eines Vertikalschlittens 7 in Z-Richtung.

In den Vertikalschlitten 7 ist eine kreisbogenförmige Führung 8 integriert, deren Mittelpunkt 9 am Wälzkreisdurchmesser eines Werkzeugs liegt. Die Führung 8 dient zur schwenkbaren Lagerung eines Wiegeschlittens 11 um eine horizontale Achse B. An dem Vertikalschlitten 7 ist ein Antriebsmotor 10 angeordnet, um den Wiegeschlitten 11 zur Einstellung der Konizität der Verzahnung um die Achse B zu verschwenken. Ein Werkzeugkopf 12 ist mit dem Wiegeschlitten 11 schwenkbar verbunden. Der Werkzeugkopf 12 kann mit einem Motor 13 um eine zur X-Richtung parallele horizontale Achse A verschwenkt werden. Diese Verschwenkung des Werkzeugkopfes 12 dient zur Einstellung des Achskreuzwinkels zwischen dem Werkzeug und dem Werkstück. In dem Werkzeugkopf 12 ist eine Werkzeugspindel 14 zu einer Verdrehung um eine Achse C₁ drehbar gelagert. Die Werkzeugspindel 14 ist mit umlaufenden Spannmitteln 15 zum halbautomatischen Spannen eines zahnradartigen Werkzeugs 16 versehen. Am Werkzeugkopf 12 ist ein Antriebsmotor 17 zum Antreiben der Werkzeugspindel 14 um die Achse C₁ angeordnet. Das Werkzeug 16 kann ein genutetes Schabrad, ein Rollrad, ein mit CBN- oder Diamantkörnem beschichtetes Hartschabrad, ein abrichtbares Werkzeug wie ein Honrad oder ein Feinrad sein, es kann aber auch ein schneckenförmiges Werkzeug sein.

Der vorstehend beschriebene Aufbau der Maschine ist grundsätzlich aus der EP 0 360 953 B1 bekannt, wenngleich die Drehachse der Werkzeugspindel bei dieser bekannten Maschine in einer horizontalen Ebene angeordnet ist.

Ein zweites Maschinenbett 18 ist mit dem Maschinenbett 1 fest verbunden, beispielsweise verschraubt. Auf dem zweiten Maschinenbett 18 ist ein Schalttisch 19 mit einem Ringlager 20 zu einer Verdrehung um eine vertikale Achse E gelagert. An dem Maschinenbett 18 ist ein Motor 21 angeordnet, der über ein Zwischengetriebe mit dem Schalttisch 19 verbunden ist. Die genaue Lageposition des Schalttisches gegenüber dem Maschinenbett 18 wird über einen Index 31 gesichert.

Auf dem Schalttisch 19 sind zwei Werkstückspindeln 22 und 23 mit vertikalen Achsen C₂ und C₃ angeordnet. Den beiden Werkstückspindeln 22 und 23 ist jeweils ein Antriebsmotor 24 bzw. 25 zugeordnet. Die Werkstückspindeln 22 und 23 sind ferner mit umlaufenden Spannmitteln 26 und 27 versehen. Die Energieversorgung der Antriebsmotoren 24 und 25 und der Spannmittel 26 und 27 erfolgt über eine zur Achse E des Schalttisches 19 konzentrische Energiezuführungssäule 30.

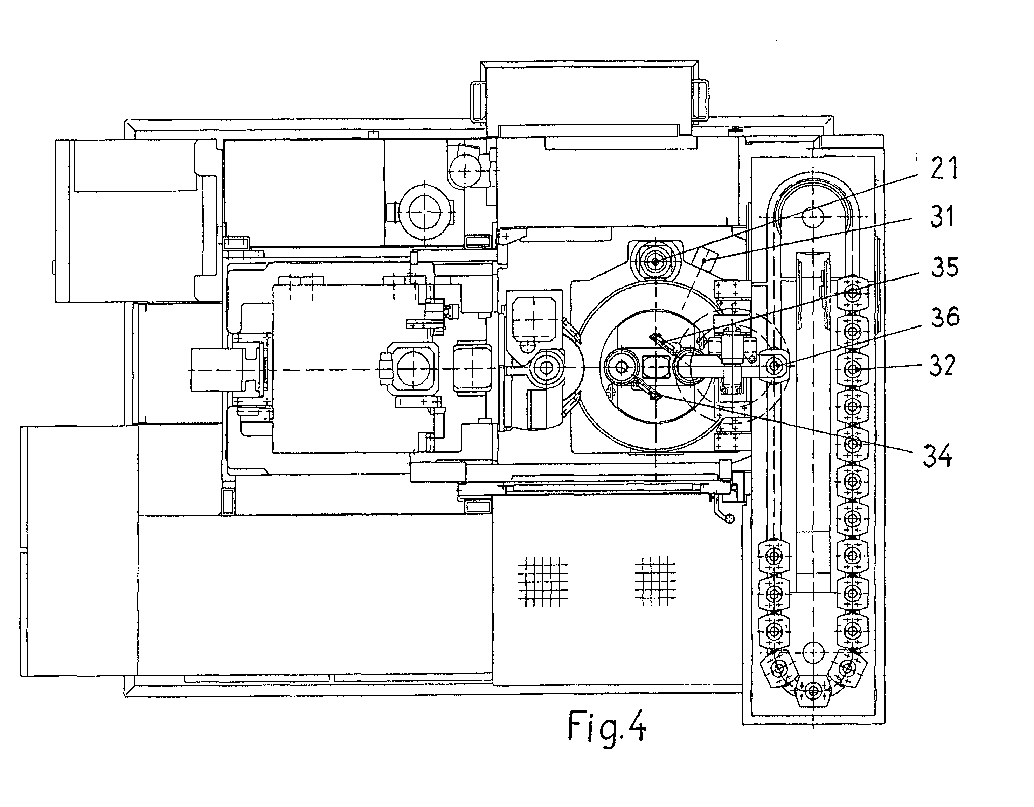

Wie aus Fig. 4 hervorgeht, ist neben dem Schalttisch 19 ein Magazin 32 für die unbearbeiteten bzw. bearbeiteten Werkstücke 28, 29 angeordnet. Zur automatischen Überführung der Werkstücke 28, 29 zwischen dem Magazin 32 und den Werkstückspindeln 22 und 23 dient ein Doppelgreifersystem 36. Das Doppelgreifersystem 36 umfaßt einen Schwenkarm, der um eine zur Drehachse E des Schalttisches 19 parallele Zentralachse verdrehbar ist und an den beiden gegenüberliegenden Enden mit einem Greifer bestückt ist. Dem Schwenkarm ist ein (nicht gezeigter) Antriebsmotor zugeordnet.

Den auf dem Schalttisch 19 angeordneten beiden Werkstückspindeln 22, 23 ist jeweils ein Sensor 34, 35 zur Ermittlung der relativen Winkelstellung der Zähne des darauf angeordneten Werkstücks 28, 29 zur Achse C₂ bzw. C₃ des Werkstücks zugeordnet. Diese Sensoren 34, 35 ermöglichen in Verbindung mit der elektronischen Zwangskupplung der Werkstückspindeln 22, 23 mit der Werkzeugspindel 14 das automatische Einfädeln des Werkstücks 28, 29 mit dem Werkzeug 16, wenn der Schalttisch 19 in die Bearbeitungsposition verdreht wird.

Während der Bearbeitung bzw. auch zum automatischen Einfädeln von Werkzeug 16 und Werkstück 28 oder 29 ist der jeweilige Motor 24 oder 25 mit dem Antriebsmotor 17 der Werkzeugspindel 14 drehzahlsynchronisiert, wobei die Übersetzung dem Verhältnis der Zähnezahl von Werkstück und Werkzeug entspricht. Das jeweils zu bearbeitende Werkstück 28 oder 29 kann über die Antriebsmotoren 24, bzw. 25 mit unterschiedlichen Drehmomenten beaufschlagt werden. Das Werkstück kann daher gegenüber dem Werkzeug beschleunigend oder bremsend angetrieben werden. Dadurch kann eine Änderung der Drehrichtung des Werkzeugs simuliert werden. Der bei herkömmlichen Maschinen zur Feinbearbeitung von Zahnrädern mit nicht angetriebenem Werkstück erforderliche Wechsel der Drehrichtung des Werkzeugs ist daher entbehrlich.

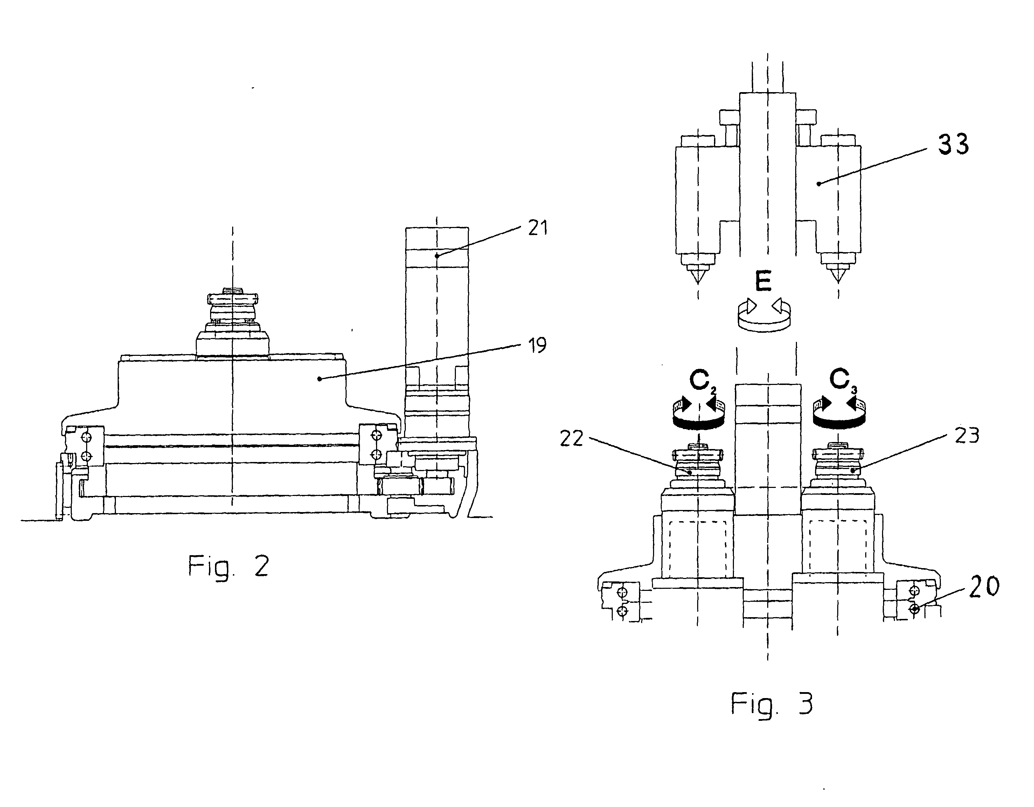

Wie dies in Fig. 3 dargestellt ist, können zur Lagefixierung wellenförmiger Werkstücke auf dem Schalttisch 19 zusätzlich zwei Reitstockspitzen 33 angeordnet sein.

Wenngleich bei dem in den Zeichnungen dargestellten und vorstehend beschriebenen Ausführungsbeispiel der Schalttisch 19 zwischen einer Übergabeposition und einer Bearbeitungsposition um ± 180° verdrehbar ist, ist es grundsätzlich möglich, dem Schalttisch eine oder mehrere zusätzliche Bearbeitungspositionen zuzuordnen. In diesen zusätzlichen Bearbeitungspositionen kann eine Vor- und/oder Nachbearbeitung, beispielsweise eine Entgratung, der Werkstücke erfolgen. Es ist aber auch möglich, daß an zwei Bearbeitungspositionen eine unterschiedliche Feinbearbeitung der Werkstücke erfolgt. Beispielsweise können verschiedene Feinbearbeitungen miteinander kombiniert werden.

Das in den Zeichnungen dargestellte Ausführungsbeispiel kann auf einfache Weise dahingehend abgewandelt werden, daß innenverzahnte Werkzeuge verwendet werden können. Zu diesem Zweck muß lediglich der Werkzeugkopf entsprechend abgewandelt werden.

Zur Erweiterung der durchführbaren Bearbeitungsverfahren ist es auch möglich, zwischen Werkzeug und Werkstück eine zusätzliche Relativbewegung rechtwinklig zu der von den Achsen X und Z gebildeten Ebene vorzusehen.

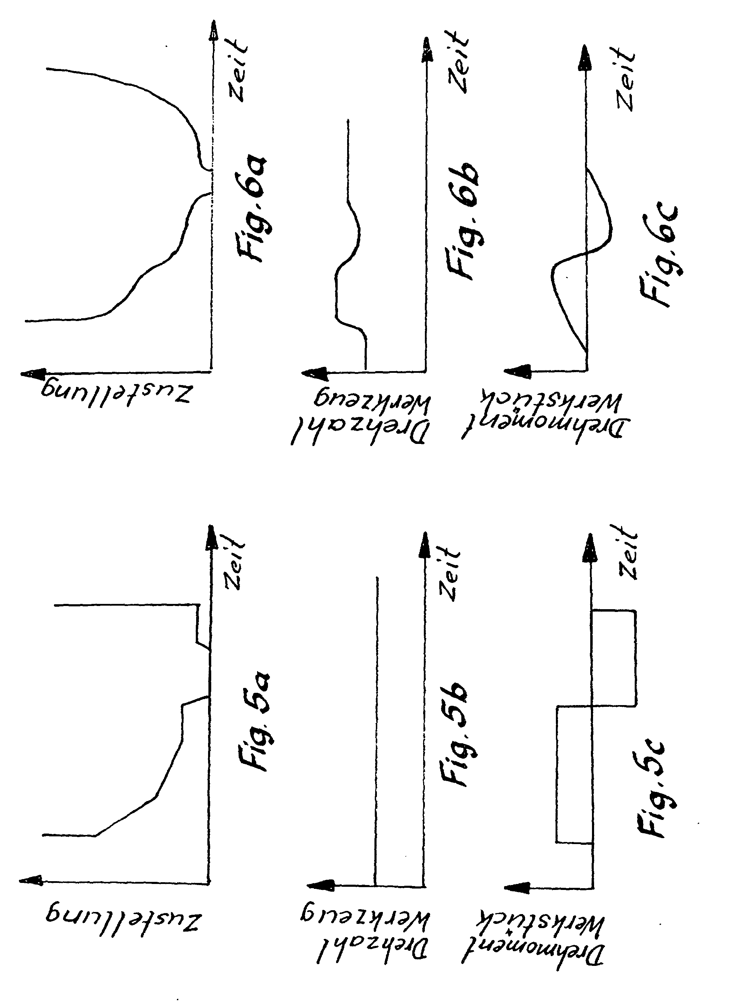

In den Fig. 5 und 6 sind Diagramme zur Erläuterung von zwei Möglichkeiten der Bearbeitung, beispielsweise des Schabens eines verzahnten Werkstücks mit einem zahnradförmigen Werkzeug dargestellt. Dabei zeigen die Fig. 5a und 6a die Zustellung des Werkzeugs, Fig. 5b und 6b die Drehzahl des Werkzeugs und Fig. 5c und 6c das auf das Werkstück aufgebrachte Drehmoment.

Gemäß Fig. 5b ist die Drehzahl des Werkzeugs während der gesamten Bearbeitungsdauer konstant. Auf das Werkstück wird zunächst ein konstantes positives Drehmoment ausgeübt. Gemäß Fig. 5c wird nach der üblichen Haltezeit anstelle der beim Stand der Technik notwendigen Umkehr der Drehrichtung des Werkzeugs die Wirkrichtung des auf das Werkstück ausgeübten Drehmoments umgekehrt. Zum Ausgleich von Qualitätseinflüssen, die aus den Eingriffsbedingungen von treibender und getriebener Zahnflanke herrühren, oder zur Verbesserung der Genauigkeit der Teilung ist es auch möglich, die Größe des während der Bearbeitung auf das Werkstück ausgeübten Drehmomentes zu variieren.

Eine weitere Verbesserung des Bearbeitungsprozesses läßt sich durch eine Änderung der Zustellstrategie und/oder der Drehzahl erzielen. Wie in Fig. 6 gezeigt, kann zu diesem Zweck eine prozeßgeführte Regelung der Zustellung erfolgen, bei welcher der Betrag der Zustellung in Abhängigkeit von einer im Prozeß ermittelten Führungsgröße gesteuert wird. Hierzu eignen sich beispielsweise die Erfassung einer oder mehrerer Prozeßkenngrößen, wie z. B. die Reaktionskräfte oder die während der Bearbeitung auftretenden Schwingungen. Durch eine solche adaptive Zustellstrategie kann die Prozeßdauer weiter verkürzt, das Bearbeitungsergebnis verbessert sowie die Werkzeugstandzeit verlängert werden, da der Prozeß so gezielt unter konstanten günstigen Bearbeitungsbedingungen durchgeführt werden kann.

### Bezugszeichenliste:

1 Maschinenbett
2 horizontale Führung auf 1
3 Antriebsmotor für 4
4 Horizontalschlitten
5 vertikale Führung auf 4
6 Antriebsmotor für 7
7 Vertikalschlitten
8 kreisbogenförmige Führung auf 7
9 Mittelpunkt von 8
10 Antriebsmotor für 11
11 Wiegeschlitten
12 Werkzeugkopf
13 Motor für 12
14 Werkzeugspindel
15 Spannmittel
16 Werkzeug
17 Antriebsmotor für 16
18 zweites Maschinenbett
19 Schalttisch
20 Ringlager für 19
21 Motor für 19
22 Werkstückspindel
23 Werkstückspindel
24 Motor für 22
25 Motor für 23
26 Spannmittel
27 Spannmittel
28 Werkstück
29 Werkstück
30 Energiezuführungssäule
31 Index für 19
32 Magazin
33 Reitstockspitzen
34 Sensor
35 Sensor
36 Doppelgreifersystem

A Schwenkachse von 12
B Schwenkachse von 11
C₁ Drehachse von 14
C₂ Drehachse von 22
C₃ Drehachse von 23
X Bewegungsrichtung von 4
Z Bewegungsrichtung von 7

## Patentansprüche

1. Verfahren zur Feinbearbeitung der Zahnflanken von verzahnten Werkstücken mit einem angetriebenen zahnradförmigen Schab- oder Honwerkzeug, wobei sich die Achsen von Werkzeug und Werkstück kreuzen, bei dem das Werkstück auf Arbeitsdrehzahl beschleunigt und sodann mit dem bereits rotierenden Werkzeug durch Zustellung in Zweiflankenwälzeingriff gebracht wird, das Werkzeug während der Feinbearbeitung der Zahnflanken des Werkstücks im Zweiflankenwälzeingriff in einer gleichbleibenden Drehrichtung angetrieben wird, und während der weiteren Zustellung auf das Werkstück einstellbare Drehmomente, die über bzw. unter denen bei freilaufender Rotation des Werkstücks liegen, zunächst in einer Richtung und sodann in entgegengesetzter Richtung aufgebracht werden.

2. Verfahren nach Anspruch 1 , **dadurch gekennzeichnet, daß** während der Bearbeitung des Werkstücks die Größe des auf dieses aufgebrachten Drehmoments, die Drehzahl und die Zustellung in Abhängigkeit von einer Führungsgröße gesteuert werden.

3. Verfahren nach Anspruch 2, **dadurch gekennzeichnet, daß** als Führungsgröße die werkzeug- oder werkstückseitig gemessenen Reaktionskräfte oder - momente verwendet werden.

4. Verfahren nach Anspruch 2, **dadurch gekennzeichnet, daß** als Führungsgröße die werkzeug- oder werkstückseitig gemessenen Schwingungen verwendet werden.

5. Verfahren nach Anspruch 2, **dadurch gekennzeichnet, daß** als Führungsgröße die werkzeug- oder werkstückseitig gemessenen Drehwinkelabweichungen verwendet werden.

6. Maschine zur Durchführung des Verfahrens nach Anspruch 1, umfassend ein Maschinenbett (1), einen auf dem Maschinenbett verschiebbar gelagerten ersten Schlitten (4), der zu Bewegungen entlang einer ersten Achse X antreibbar ist, einen auf dem ersten Schlitten verschiebbar gelagerten zweiten Schlitten (7), der zu Bewegungen entlang einer zu der ersten Achse X rechtwinkligen zweiten Achse Z antreibbar ist, einen mit dem zweiten Schlitten (7) schwenkbar verbundenen Werkzeugkopf (R), der zur Einstellung des Achskreuzwinkels zwischen Werkzeug (16) und Werkstück (28,29) um eine zu der ersten Achse X parallele dritte Achse A schwenkbar ist, einen auf dem Werkzeugkopf (12) angeordneten Motor (13) für den Antrieb einer Werkzeugspindel (14) und eine Werkstückspindel (22,23) mit Spannmitteln (26,27) zum Einspannen eines Werkstücks (28,29), **dadurch gekennzeichnet, daß** ein Schalttisch (19) mit dem Maschinenbett (18) drehbar verbunden ist zu einer Verdrehung um eine zu der zweiten Achse Z parallele Achse E, daß der Schalttisch (19) mit einem Motor (21) zu Drehbewegungen um definierte Drehwinkel antreibbar ist, daß der Schalttisch (19) mindestens zwei Werkstückspindeln (22, 23) trägt, deren Drehachsen C₂, C₃ zu der vierten Achse E parallel sind und von dieser den gleichen Abstand haben, daß dem Schalttisch (19) ein Index (31) zugeordnet ist, der ihn in der Bearbeitungsphase gegen eine Verdrehung blockiert, daß jede der Werkstückspindeln (22, 23) mit einem Antriebsmotor (24, 25) verbunden ist, daß jeder Werkstückspindel (22, 23) ein Sensor (34, 35) zur Ermittlung der Winkelstellung der Zähne des Werkstücks (28, 29) zur Achse C₂, C₃ des Werkstücks zugeordnet ist, daß die Antriebsmotoren (13; 24, 25) der Werkzeugspindel (14) und der Werkstückspindel (22, 23) durch ein elektronisches Getriebe gekoppelt sind, das in Abhängigkeit von einem Signal des Sensors (34, 35) Werkzeug (16) und Werkstück (28, 29) derart zueinander verdreht, daß Zahn auf Lücke steht, und daß das Drehmoment der Antriebsmotoren (13; 24, 25) der Werkzeugspindel (14) und der Werkstückspindeln (22, 23) in beiden Richtungen regelbar ist.

7. Maschine nach Anspruch 6, **dadurch gekennzeichnet, daß** der Schalttisch (19) mit beweglichen Reitstockspitzen (33) bestückt ist.

8. Maschine nach einem der vorhergehenden Ansprüche, **dadurch gekennzeichnet, daß** im Bereich des Schalttisches (19) ein Magazin (32) für die unbearbeiteten und bearbeiteten Werkstücke (28, 29) angeordnet ist.

9. Maschine nach Anspruch 8, **gekennzeichnet durch** ein Greifersystem (36) zum Überführen der unbearbeiteten/bearbeiteten Werkstücke (28, 29) zwischen dem Magazin (32) und den Werkstückspindeln (22, 23).

10. Maschine nach Anspruch 9, **dadurch gekennzeichnet, daß** das Greifersystem (36) einen Schwenkarm umfaßt, der um eine zur Drehachse E des Schalttisches (19) parallele Zentralachse verdrehbar ist und an den beiden gegenüberliegenden Enden mit einem Greifer bestückt ist.

11. Maschine nach einem der vorhergehenden Ansprüche, **dadurch gekennzeichnet, daß** dem Schalttisch (19) eine oder mehrere zusätzliche Barbeitungsstationen zugeordnet sind, in denen die Werkstückspindeln (22, 23) für eine weitere Bearbeitung der Werkstücke (28, 29) positionierbar sind.

12. Maschine nach einem der vorhergehenden Ansprüche, **gekennzeichnet durch** eine zur Drehachse E des Schalttisches (19) konzentrisch angeordnete Energiezuführungsäule (30).

## Claims

1. Method for finishing the tooth flanks of toothed workpieces with a driven scraping or honing tool in the shape of a toothed wheel, in which the axes of the tool and the workpiece cross, in which the workpiece accelerates to the working speed and is then brought into two flank roller contact with the tool which is already rotating by feeding, the tool is driven in a constant direction of rotation during finishing of the tooth flanks of the workpiece in two flank roller contact and during further feeding the adjustable torques, which are above or below those when the workpiece is freely rotating, are applied to the workpiece first in one direction and then in the opposite direction.

2. Method according to claim 1, **characterised by the fact that** during finishing of the workpiece the size of the torque applied to it, the speed and the feeding can be controlled depending on a reference variable.

3. Method according to claim 2, **characterised by the fact that** the reaction forces or torques measured on the tool or workpiece are used as a reference variable.

4. Method according to claim 2, **characterised by** the fact that the oscillations measured on the tool or workpiece are used as a reference variable.

5. Method according to claim 2, **characterised by the fact that** the deviations in angle of rotation measured on the tool or workpiece are used as a reference variable.

6. Machine for carrying out the method according to claim 1, including a machine bed, a first carriage (4) arranged on the bed so that it can move, which can be driven to move along a first axis X, a second carriage (7) arranged on the first carriage so that it can move, which can be driven to move along a second axis Z, which is at right angles to the first axis X, a tool head (12) which is connected to the second carriage (7) so that it can swivel, which to adjust the axis crossing angle between the tool (16) and the workpiece (28, 29), can be swivelled around a third axis A, which is parallel to the first axis X, a motor (13) arranged on the tool head (12) to drive a tool spindle (14) and a workpiece spindle (22, 23) with means of clamping (26, 27) to clamp a workpiece (28, 29), **characterised by the fact that** an indexing table (19) is connected to the machine bed (18) so that it can turn, to turn around an axis E, which is parallel to the second axis Z, that the indexing table (19) can be driven with a motor (21) to turn around a defined angle of rotation, that the indexing table (19) has at least two workpiece spindles (22, 23), the axes of rotation of which C₂, C₃ are parallel to the fourth axis E and are the same distance away from it, that the indexing table (19) has an index (31) assigned to it, which stops it turning in the finishing phase, that each of the workpiece spindles (22, 23) is connected to a driving motor (24, 25), that each workpiece spindle (22, 23) is assigned a sensor (34, 35) to determine the angular position of the teeth of the workpiece (28, 29) to the axis C₂, C₃ of the workpiece, that the driving motors (13; 24, 25) of the tool spindle (14) and the workpiece spindle (22, 23) are connected by an electronic gear, which depending on a signal from the sensor (34, 35) turns the tool (16) and the workpiece (28, 29) in such a way in relation to each other that the tooth is above a gap and that the torque of the driving motors (13; 24, 25) of the tool spindle (14) and the workpiece spindles (22, 23) can be adjusted in both directions.

7. Machine according to claim 6, **characterised by the fact that** the indexing table (19) is fitted with tailstock centres (33), which can be moved.

8. Machine according to one of the previous claims, **characterised by the fact that** there is a magazine (32) for finished and unfinished workpieces (28, 29) arranged in the area of the indexing table (19).

9. Machine according to claim 8, **characterised by** a claw feed system (36) for transferring the unfinished/finished workpieces (28, 29) between the magazine (32) and the workpiece spindles (22, 23).

10. Machine according to claim 9, **characterised by the fact that** the claw feed system (36) has a swivel arm, which can be turned around a central axis, which is parallel to the axis of rotation E of the indexing table (19), and is fitted with a gripper on both ends facing each other.

11. Machine according to one of the previous claims, **characterised by the fact that** the indexing table (19) has one or several additional finishing stations assigned to it, in which the workpiece spindles (22, 23) can be positioned for further finishing of the workpieces (28, 29).

12. Machine according to one of the previous claims, **characterised by** a power supply column (30), which is arranged concentrically to the axis of rotation E of the indexing table (19).

## Revendications

1. Procédé pour la finition des flancs de dents de pièces dentées avec un outil d'arasage ou de honage en forme de roue dentée entraîné, dans lequel les axes de l'outil et de la pièce se croisent, dans lequel la pièce est accélérée à la vitesse de rotation de travail et ensuite, par approche, engrenée avec l'outil déjà en rotation par roulement sur deux flancs, l'outil est entraîné dans un sens de rotation constant pendant la finition des flancs de dents de la pièce engrenée par roulement sur deux flancs, et, pendant la suite de l'approche, des couples réglables, qui se situent au-dessus ou au-dessous de ceux dans le cas de la rotation en roue libre de la pièce, sont appliqués à la pièce d'abord dans un sens et ensuite dans le sens opposé.

2. Procédé selon la revendication 1, **caractérisé par le fait que** pendant l'usinage de la pièce, la grandeur du couple appliqué à celle-ci, la vitesse de rotation et l'approche sont commandées en fonction d'une grandeur de commande.

3. Procédé selon la revendication 2, **caractérisé par le fait que** l'on utilise comme grandeur de commande les forces ou moments de réaction mesurés du côté de l'outil ou du côté de la pièce.

4. Procédé selon la revendication 2, **caractérisé par le fait que** l'on utilise comme grandeur de commande les vibrations mesurées du côté de l'outil ou du côté de la pièce.

5. Procédé selon la revendication 2, **caractérisé par le fait que** l'on utilise comme grandeur de commande les écarts angulaires mesurés du côté de l'outil ou du côté de la pièce.

6. Machine pour réaliser le procédé selon la revendication 1, comprenant un banc de machine (1), un premier chariot (4) déplaçable sur le banc de machine, qui peut être entraîné en vue d'effectuer des mouvements le long d'un premier axe X, un deuxième chariot (7) déplaçable sur le premier chariot, qui peut être entraîné en vue d'effectuer des mouvements le long d'un deuxième axe Z perpendiculaire au premier axe X, une tête d'outil (12) liée de manière pivotante avec le deuxième chariot (7), qui peut être pivotée autour d'un troisième axe A parallèle au premier axe X pour régler l'angle de croisement des axes entre l'outil (16) et la pièce (28, 29), un moteur (13) disposé sur la tête d'outil (12) pour entraîner une broche d'outil (14) et une broche de pièce (22, 23) avec des moyens de serrage (26, 27) pour serrer une pièce, **caractérisée par le fait qu'**un plateau tournant (19) est lié de manière rotative avec le banc de machine (18) en vue d'effectuer une rotation autour d'un axe E parallèle au deuxième axe Z, que le plateau tournant (19) peut être entraîné par un moteur (21) en vue d'effectuer des mouvements de rotation d'angles de rotation définis, que le plateau tournant (19) porte au moins deux broches de pièce (22, 23) dont les axes de rotation C₂, C₃ sont parallèles au quatrième axe E et sont situés à même distance de celui-ci, qu'au plateau tournant (19) est associé un index (31) qui le bloque contre une rotation lors de la phase d'usinage, que chacune des broches de pièce (22, 23) est liée à un moteur d'entraînement (24, 25), qu'à chaque broche de pièce (22, 23) est associé un capteur (34, 35) pour déterminer la position angulaire des dents de la pièce (28, 29) par rapport à l'axe C₂, C₃ de la pièce, que les moteurs d'entraînement (13 ; 24, 25) de la broche d'outil (14) et des broches de pièce (22, 23) sont couplés par un variateur électronique qui, en fonction d'un signal du capteur (34, 35), tourne l'outil (16) et la pièce (28, 29) l'un par rapport à l'autre de telle façon qu'une dent soit en face d'une lacune, et que le couple des moteurs d'entraînement (13 ; 24, 25) de la broche d'outil (14) et des broches de pièce (22, 23) est réglable dans les deux sens.

7. Machine selon la revendication 6, **caractérisée par le fait que** le plateau tournant (19) est équipé de contre-pointes (33) mobiles.

8. Machine selon l'une des revendications précédentes, **caractérisée par le fait qu'**un magasin (32) pour les pièces non usinées et usinées (28, 29) est disposé au voisinage du plateau tournant (19).

9. Machine selon la revendication 8, **caractérisée par** un système de préhension (36) pour le transfert des pièces non usinées (28, 29) entre le magasin (32) et les broches de pièce (22, 23).

10. Machine selon la revendication 9, **caractérisée par le fait que** le système de préhension (36) comprend un bras pivotant qui peut tourner autour d'un axe central parallèle à l'axe de rotation E du plateau tournant (19) et est équipé d'une pince aux deux extrémités opposées.

11. Machine selon l'une des revendications précédentes, **caractérisée par le fait qu'**au plateau tournant (19) sont associés un ou plusieurs postes d'usinage supplémentaires sur lesquels les broches de pièce (22, 23) peuvent être positionnées pour un autre usinage des pièces (28, 29).

12. Machine selon l'une des revendications précédentes, **caractérisée par** une colonne d'amenée d'énergie (30) disposée concentriquement à l'axe de rotation E du plateau tournant (19).
